(19) Europäisches Patentamt
European Patent Office
Office européen des brevets

(11) Veröffentlichungsnummer: **0 000 551**
**B1**

(12) # EUROPÄISCHE PATENTSCHRIFT

(45) Veröffentlichungstag der Patentschrift: **01.04.81**

(51) Int. Cl.³: **C 08 G 18/38**

(21) Anmeldenummer: **78100451.0**

(22) Anmeldetag: **20.07.78**

(54) **Thiogruppenhaltige Polyurethankunststoffe und Verfahren zu deren Herstellung.**

(30) Priorität: **30.07.77 DE 2734574**

(43) Veröffentlichungstag der Anmeldung: **07.02.79 Patentblatt 79/3**

(45) Bekanntmachung des Hinweises auf die Patenterteilung: **01.04.81 Patentblatt 81/13**

(84) Benannte Vertragsstaaten: **BE DE FR GB**

(56) Entgegenhaltungen: **US-A-3 897 400**

(73) Patentinhaber: **BAYER AG, Zentralbereich Patente, Marken und Lizenzen, D-5090 Leverkusen 1, Bayerwerk (DE)**

(72) Erfinder: **Schwindt, Jürgen, Dr., Heymannstrasse 38, D-5090 Leverkusen (DE)**
Erfinder: **Grögler, Gerhard, Dr., von-Diergardtstrasse 46, D-5090 Leverkusen (DE)**
Erfinder: **Uhrhan, Paul, Dr., Brunnenweg 27, 05068 Odenthal (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchgebühr entrichtet worden ist (Art. 99(1) Europäisches Patentübereinkommen).



ACTORUM AG.

# Thiogruppenhaltige Polyurethankunststoffe und Verfahren zu deren Herstellung

Die vorliegende Erfindung betrifft neue Polyurethankunststoffe, die unter Verwendung von gegebenenfalls substituierten, thiogruppenhaltigen araliphatischen Diaminen als Kettenverlängerungsmittel hergestellt wurden.

Die Verwendung aromatischer Diamine als Kettenverlängerer bei der Herstellung von Polyurethanen ist bekannt. Um angemessene Verarbeitungszeiten zu gewährleisten, setzt man die technisch meist verwendeten reaktionsfähigen aromatischen Isocyanate zweckmässigerweise mit träge reagierenden Diaminen um. Als träge reagierende Diamine haben sich vor allem solche aromatischen Diamine bewährt, deren Basizität und damit auch Reaktivität gegenüber Isocyanaten durch Einführung von Halogen- oder Carboxy-Substituenten herabgesetzt wurde. Als Beispiel sei das bisher am meisten verwendete 3,3'-Dichlor-4,4'-diaminodiphenylmethan (MOCA) genannt. Der Hauptnachteil dieser Verbindung liegt jedoch in ihrer Toxizität. Im US-Patent 3823833 ist vorgeschlagen worden, als Kettenverlängerer bei der Herstellung von Polyurethansystemen 2,2'- oder 4,4'-Diaminodiphenyldisulfid zu verwenden. Der Nachteil dieser Verbindungen liegt jedoch in der Anfälligkeit der S-S-Gruppierung im Polyurethansegment gegenüber reduktiver oder oxidativer Spaltung und in den kurzen Topf- und langen Formstandzeiten bei der Reaktion mit Polyisocyanaten, die einer wirtschaftlichen Verarbeitung entgegenstehen.

Im US-Patent 3 897 400 verwendet man das aromatische Diamin 4,4'-Diamino-diphenylsulfid als Kettenverlängerungsmittel für NCO-Prepolymere (oder Mischungen aus Diisocyanaten und Polyolen) in lösungsmittelhaltigen Reaktionsansätzen, wobei die Reaktivität des aromatischen Diamins geringer als bei 4,4'-Diamino-diphenylmethan ist.

In der japanischen Offenlegungsschrift 9195/70 wird eine konzentrierte Polyurethanlösung beschrieben, die zur Herstellung von Fasern, Filmen und Kunstledern mit guter Lichtstabilität verwendet werden kann. Man setzt dabei anteilweise (9,5-60 Mol%) eines Diamins der Formel $H_2N-R-(S-R)_n-NH_2$, wo R in gleicher oder verschiedener aliphatischer, aromatischer, alicyclischer oder heterocyclischer Rest ist (in Beispielen werden $H_2N(CH_2)_3-S-(CH_2)_3-NH_2$, oder

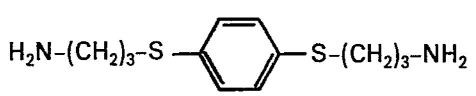

eingesetzt) neben anderen Kettenverlängerungsmitteln mit 2 aktiven Wasserstoffatomen (im Beispiel 1,2-Propylendiamin) in hochpolaren Lösungsmitteln wie Dimethylformamid, mit einem NCO-Prepolymer um.

Der Hauptnachteil eines mit derartigen aliphatischen Diaminen kettenverlängerten Systems ist die wegen der zu hohen Reaktivität beider Aminogruppen notwendige Mitverwendung eines organischen Lösungsmittels, was beträchtlich die Kosten erhöht, die Entfernung des Lösungsmittels erfordert, zusätzliche Absaugvorrichtungen notwendig macht und auch Feuer- und Explosionsgefahr mit sich bringt.

Im US-Patent 3 920 617 wird vorgeschlagen, schwefelhaltige Polyamine der allgemeinen Formel

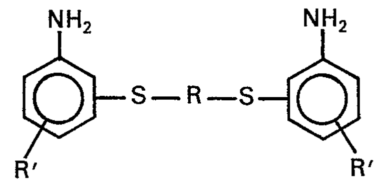

als Kettenverlängerer zur Herstellung von Polyurethanelastomeren zu verwenden. Im Temperaturbereich von 25-60 °C ermöglicht dieser Verbindungstyp eine ausreichend lange Verarbeitungszeit; wegen der bei diesen Verarbeitungstemperaturen zu hohen Viskosität von NCO-Präpolymeren entstehen jedoch nur unzureichend vernetzte, inhomogene Elastomerkörper. Im Verarbeitungsbereich von 80-110 °C werden zwar homogene Elastomere erhalten, jedoch verlängert sich hier die Topfzeit nur geringfügig im Vergleich zu MOCA, so dass keine wesentliche Verbesserung der Verarbeitungsbedingungen gegenüber den aromatischen Diaminen des Standes der Technik gegeben ist.

Der vorliegenden Erfindung liegt nun die Aufgabe zugrunde, die oben beschriebenen Nachteile der bekannten aromatischen Diamin-Kettenverlängerer – wie Toxizität und leichte reduktive oder oxidative Spaltung der S-S-Gruppierung – bzw. der daraus herstellbaren Polyurethanelastomeren zu vermeiden und darüber hinaus Polyurethan-Reaktivsysteme zur Verfügung zu stellen, welche den Vorteil der lösungsmittelfreien Verarbeitung, längerer Topf- und kürzerer Formstandzeiten besitzen.

Diese Aufgabe wird mit Hilfe der erfindungsgemäss einzusetzenden thiogruppenhaltigen araliphatischen Diamine gelöst.

Gegenstand der vorliegenden Erfindung sind Polyurethankunststoffe auf Basis von Polyisocyanaten, höhermolekularen und gegebenenfalls niedermolekularen Polyhydroxylverbindungen sowie schwefelhaltigen Diaminen, dadurch gekennzeichnet, dass die Struktureinheiten der allgemeinen Formel

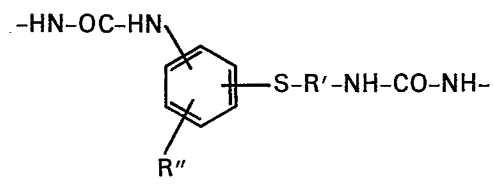

enthalten, in welcher

R' für einen gegebenenfalls verzweigten divalenten aliphatischen, cycloaliphatischen oder araliphatischen Rest mit 2 bis 20 C-Atomen steht, wobei R′ an die -NH-Gruppe aliphatisch gebunden ist, und

R″ Wasserstoff, einen gegebenenfalls verzweigten Alkylrest mit 1–6 C-Atomen, einen Arylrest mit 6–15 C-Atomen, einen Cycloalkylrest mit 4–12 C-Atomen, Halogen, $-NO_2$, -CN, -OR‴ oder einen Rest $-\overset{\overset{\displaystyle O}{\|}}{C}-O-R'''$

darstellt, wobei

R‴ einen gegebenenfalls verzweigten Alkylrest mit 1 bis 6 C-Atomen bedeutet.

Erfindungsgemäss bevorzugt sind Produkte, bei denen die Harnstoffgruppe in ortho- oder meta-Stellung, besonders bevorzugt in ortho-Stellung, zum Schwefel steht.

Die vorliegende Erfindung hat darüber hinaus auch ein Verfahren zur Herstellung von gegebenenfalls zellförmigen Polyurethankunststoffen durch Umsetzung von Polyhydroxylverbindungen vom Molekulargewicht 400 bis 10000 sowie gegebenenfalls niedermolekularen Polyhydroxylverbindungen vom Molekulargewicht 32 bis 400 und mindestens zwei Hydroxylgruppen mit Polyisocyanaten und araliphatischen Diaminen als Kettenverlängerungsmittel, gegebenenfalls in Gegenwart von Katalysatoren, Treibmitteln und weiteren an sich bekannten Zusatzstoffen, zum Gegenstand, welches dadurch gekennzeichnet ist, dass als Diamine solche der allgemeinen Formel

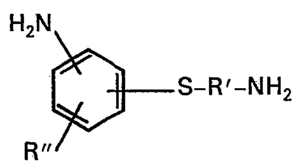

verwendet werden, in denen R′ und R″ die oben angegebene Bedeutung haben.

Wie sich zeigte, können insbesondere die araliphatischen Diamine, bei denen die Aminogruppe in o-Stellung zum Schwefel steht, auch ohne Zusatz von organischen Lösungsmitteln in Giesselastomersystemen und Verschäumungsprozessen eingesetzt werden und ermöglichen dabei ausgezeichnete Verarbeitungsbedingungen, sowohl bei der Herstellung von Elastomeren als auch beim Verschäumen.

Überraschenderweie wurde gefunden, dass die aromatisch gebundene $NH_2$-Gruppe im Vergleich zur aliphatisch gebundenen $NH_2$-Gruppe derartig reaktionsträge ist, dass lange Verarbeitungszeiten erhalten werden. Trotz schneller Vorreaktion der aliphatisch gebundenen $NH_2$-Gruppe mit Isocyanat steigt die Viskosität des reagierenden Gemisches nur geringfügig an, so dass auch bei einer Verarbeitungstemperatur von 110°C eine ausreichend lange Verarbeitungszeit gewährleistet ist.

Durch die schnelle Vorreaktion der aliphatisch gebundenen Aminogruppe wird im Gegensatz zu US-PS 3897400 ein geordneter Polymeraufbau erreicht. Ausserdem wird jegliches Abgeben von Diamin-Dämpfen in der gegebenenfalls heissen Polyurethan-Reaktionsmischung vermieden, da das erfindungsgemässe Diamin halbseitig sehr schnell fixiert wird. Weiterhin ist sehr vorteilhaft, dass die erfindungsgemässen Diamine toxikologisch sehr viel günstiger sind und keine mutagene Wirkung besitzen.

Weitere wichtige Vorteile der erfindungsgemäss zu verwendenden Kettenverlängerer sind ihre einfache Zugänglichkeit und ihr bei Raumtemperatur im allgemeinen flüssiger Zustand bzw. ihr niedriger Schmelzpunkt, was ihre Verwendung besonders vereinfacht, da die Diamine vor ihrem Zusatz zur Reaktionsmischung nicht geschmolzen werden müssen, wodurch zusätzlich noch Energiekosten eingespart werden, und die ausserordentlich lange Topfzeit der reagierenden PUR-Systeme.

Erfindungsgemäss bevorzugt werden araliphatische Diamine eingesetzt, in denen die aromatische Aminogruppe in o-Stellung zum Schwefel steht. Bevorzugt sind auch Diamine, bei denen R″ für H oder Methyl, insbesondere Wasserstoff, steht.

Erfindungsgemäss besonders bevorzugt sind daher Polyurethane mit wiederkehrenden Struktureinheiten der Formel

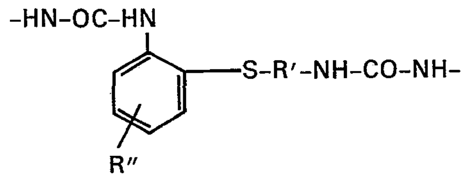

wobei R′ und R″ die oben angegebene Bedeutung haben.

Die erfindungsgemäss besonders bevorzugt verwendeten Diamine entsprechen der Formel

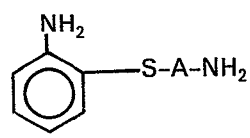 (I)

In dieser allgemeinen Formel I bedeutet A einen geradkettigen oder verzweigten aliphatischen Kohlenwasserstoffrest mit 2–20, vorzugsweise 2–12, besonders bevorzugt 2–6 C-Atomen oder einen araliphatischen Kohlenwasserstoffrest mit 8 C-Atomen.

A steht beispielsweise für einen der folgenden zweiwertigen Reste:

Äthylen-, Propylen-, Trimethylen-, 1,2-Butylen-, 1,2-Isobutylen-, Tetramethylen-, 2,3-Butylen-, Pentamethylen-, 1,2-Pentylen-, 1,2-Isopentylen-, Hexamethylen-, 1,2-Hexylen-, Isobutyläthylen-, Octamethylen-, Dodekamethylen-, Xylylen- oder Phenyläthylen-Gruppe.

Beispiele für Verbindungen der allgemeinen Formel I, welche z.T. neu sind, schliessen ein:

2-(2-Aminoäthylthio)-anilin, Farmaco Ed. Sci. 22 (7) S. 519-27 (1967),
2-(2-Aminopropylthio)-anilin,
2-(3-Aminopropylthio)-anilin,
2-(2-Amino-2,2-dimethyl-äthylthio)-anilin,
2-(4-Aminobutylthio)-anilin,
2-(2-Amino-1,2-dimethyl-äthylthio)-anilin,
2-(5-Aminopentylthio)-anilin,

2-(6-Aminohexylthio)-anilin,
2-(5-Aminohexylthio)-anilin,
2-(2-Aminoisobutylthio)-anilin,
2-(12-Aminododecylthio)-anilin oder
2-(2-Aminophenyläthylthio)-anilin.

Bei der Herstellung der Verbindungen der allgemeinen Formel (I) werden Benzothiazol sowie Halogenalkylamine der Formel (II) bzw. die unten näher beschriebenen Derivate davon, als Ausgangsmaterialien eingesetzt

$$X\text{-}A\text{-}NH_2 \qquad (II)$$

In der allgemeinen Formel (II) bedeutet X Cl oder Br, vorzugsweise Cl, während A die oben erwähnte Bedeutung hat.

Zur Herstellung der erfindungsgemäss zu verwendenden Diamine erhitzt man Benzothiazol mit einer mindestens stöchiometrischen Menge (bevorzugt Überschuss von 0–10 Mol-%) einer Alkali- oder Erdalkalilauge – vorzugsweise Natron- oder Kalilauge, ganz besonders bevorzugt Natronlauge – und fügt das Halogenalkylamin bzw. das Derivat davon anschliessend, vorzugsweise in Form einer Lösung in einem geeigneten Lösungsmittel, zu dem Reaktionsansatz hinzu. Die Reaktionspartner werden vorzugsweise in stöchiometrischen Mengen miteinander umgesetzt. Man kann jedoch auch mit einem bis zu 10fachen Überschuss an Benzothiazol arbeiten.

Als Lösungsmittel sind bei diesem Herstellungsverfahren die folgenden besonders geeignet:
Wasser, Alkohole wie z.B. Methylalkohol, Äthylalkohol, Propylalkohol oder Isopropylalkohol, Ketone wie Aceton oder Methyläthylketon; Äthylenglykol und dessen Alkyläther, Diäthylenglykol oder Triäthylenglykol oder auch Dimethylformamid, Dimethylsulfoxid und Dioxan bzw. Mischungen davon.

Bevorzugte Lösungsmittel sind Wasser und niedere Alkohole; ganz besonders bevorzugt sind Wasser sowie Mischungen von Wasser mit Methyl-, Äthyl- oder Isopropylalkohol.

Pro Mol Benzothiazol verwendet man im allgemeinen 200 bis 5000 ml Lösungsmittel, vorzugsweise 200–2000 ml Lösungsmittel.

Die Reaktionstemperatur liegt im Bereich von 20 bis 180°C, vorzugsweise im Bereich von 50 bis 140°C, wobei der Bereich von 70 bis 120°C ganz besonders bevorzugt wird.

Die Reaktionszeit liegt im Bereich von 30 Minuten bis 10 Stunden. Bevorzugt ist der Bereich von 1 Stunde bis 6 Stunden.

Der Reaktionsdruck beträgt 1 bar bis 10 bar. Vorzugsweise wird bei Normaldruck gearbeitet; jedoch kann es auch vorteilhaft sein, zwecks Beschleunigung der Reaktion bei erhöhtem Druck zu arbeiten.

Als Derivate von Halogenalkylaminen der obigen Formel (II) kommen bei der Herstellung von Verbindungen der Formel (I) einerseits die Ammonsalze mit Mineral- oder organischen Säuren und andererseits Amide mit Carbonsäuren oder Urethane der allgemeinen Formel

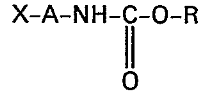

in Frage, wobei R für einen gegebenenfalls verzweigten Alkylrest mit 1 bis 6 C-Atomen steht. Bevorzugte Ammonsalze sind jene von Salz-, Schwefel-, Essig- und Oxalsäure bzw. Bromwasserstoff (besonders bevorzugt von Salzsäure und Essigsäure), bevorzugtes Urethan jenes des tert.-Butylalkohols.

Für das erfindungsgemässe Verfahren geeignete Polyhydroxylverbindungen haben ein Molekulargewicht von 400 bis 10 000, vorzugsweise 600–4000. Es handelt sich dabei um mindestens zwei, vorzugsweise 2 bis 4, Hydroxylgruppen aufweisende Polyester, Polyäther, Polythioäther, Polyacetale, Polycarbonate und Polyesteramide, wie sie für die Herstellung von homogenen und von zellförmigen Polyurethanen an sich bekannt sind.

Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Die Polyester können anteilig endständige Carboxylgruppen aufweisen. Auch Polyester aus Lactonen, z.B. ε-Caprolacton oder Hydroxycarbonsäuren, z.B. ω-Hydroxycapronsäure, sind einsetzbar.

Auch die erfindungsgemäss in Frage kommenden, mindestens zwei, in der Regel zwei bis acht, vorzugsweise zwei bis drei, Hydroxylgruppen aufweisenden Polyäther sind solche der an sich bekannten Art und werden z.B. durch Polymerisation von Epoxiden wie Äthylenoxid, Propylenoxid, Butylenoxid, Tetrahydrofuran, Styroloxid oder Epichlorhydrin mit sich selbst, z.B. in Gegenwart von $BF_3$, oder durch Anlagerung dieser Epoxide, gegebenenfalls im Gemisch oder nacheinander, an Startkomponenten mit reaktionsfähigen Wasserstoffatomen wie Wasser, Alkohole, Ammoniak oder Amine, z.B. Äthylenglykol, Propylenglykol-(1,3) oder -(1,2), Trimethylolpropan, 4,4′-Dihydroxy-diphenylpropan, Anilin, Äthanolamin oder Äthylendiamin hergestellt. Vielfach sind solche Polyäther bevorzugt, die überwiegend (bis zu 90 Gew.-%, bezogen auf alle vorhandenen OH-Gruppen im Polyäther) primäre OH-Gruppen aufweisen. Auch durch Vinylpolymerisate modifizierte Polyäther, wie sie z.B. durch Polymerisation von Styrol und Acrylnitril in Gegenwart von Polyäthern entstehen (amerikanische

Patentschriften 3 383 351, 3 304 273, 3 523 093, 3 110 695, deutsche Patentschrift 1 152 536), sind geeignet, ebenso OH-Gruppen aufweisende Polybutadiene.

Weitere geeignete Polyhydroxylverbindungen stellen Polythioäther, Polyacetale, Polycarbonate, Polyesteramide, Polyamide und auch bereits Urethan- oder Harnstoffgruppen enthaltende Polyhydroxylverbindungen sowie gegebenenfalls modifizierte natürliche Polyole, wie Rizinusöl, Kohlenhydrate oder Stärke, dar. Auch Anlagerungsprodukte von Alkylenoxiden an Phenol-Formaldehyd-Harze oder auch an Harnstoff-Formaldehydharze zum Aufbau der Polyurethane kommen in Betracht.

Vertreter dieser erfindungsgemäss zu verwendenden Verbindungen sind z.B. in High Polymers, Vol. XVI, «Polyurethanes, Chemistry and Technology», verfasst von Saunders-Frisch, Interscience Publishers, New York, London, Band I, 1962, Seiten 32–42 und Seiten 44–54 und Band II, 1964, Seiten 5–6 und 198–199, sowie im Kunststoff-Handbuch, Band VII, Vieweg-Höchtlen, Carl-Hanser-Verlag, München, 1966, z.B. auf den Seiten 45–71, beschrieben.

Selbstverständlich können Mischungen der obengenannten Verbindungen mit mindestens zwei gegenüber Isocyanaten reaktionsfähigen Wasserstoffatomen mit einem Molekulargewicht von 400–10 000, z.B. Mischungen von Polyäthern und Polyestern, eingesetzt werden.

Als erfindungsgemäss gegebenenfalls einzusetzende Ausgangskomponenten kommen auch Verbindungen mit mindestens zwei Hydroxylgruppen von einem Molekulargewicht 32–400 in Frage.

Als Beispiele für derartige Verbindungen seien genannt: Äthylenglykol, Propylenglykol-(1,2) und -(1,3), Butylenglykol-(1,4) und -(2,3), Neopentylglykol, 1,4-Bis-hydroxymethyl-cyclohexan, Glyzerin, Trimethylolpropan, Trimethyloläthan, Pentaerythrit, Chinit, Mannit und Sorbit, Triäthylenglykol, Polyäthylenglykole mit einem Molekulargewicht bis 400, Dipropylenglykol, Polypropylenglykole mit einem Molekulargewicht bis 400, Dibutylenglykol, Polybutylenglykole mit einem Molekulargewicht bis 400, 4,4′-Dihydroxydiphenylpropan, Di-hydroxymethyl-hydrochinon, Diäthanolamin und Triäthanolamin.

Auch in diesem Fall können Mischungen von verschiedenen Verbindungen mit mindestens zwei Hydroxylgruppen mit einem Molekulargewicht von 32–400 verwendet werden.

Erfindungsgemäss können jedoch auch Polyhydroxylverbindungen eingesetzt werden, in welchen hochmolekulare Polyaddukte bzw. Polykondensate in feindisperser oder gelöster Form enthalten sind. Derartige modifizierte Polyhydroxylverbindungen werden beispielsweise in den Deutschen Auslegeschriften 1 168 075 und 1 260 142, sowie den Deutchen Offenlegungsschriften 2 324 134, 2 423 984, 2 512 385, 2 513 815, 2 550 796, 2 550 797, 2 550 833, 2 550 862, US-Patent 3 869 413 bzw. DE-OS 2 550 860 beschrieben.

Als erfindungsgemäss einzusetzende Ausgangskomponenten kommen weiter aliphatische, cycloaliphatische, araliphatische, aromatische und heterocyclische Polyisocyanate in Betracht, wie sie z.B. von W. Siefken in Justus Liebigs Annalen der Chemie, 562, Seiten 75 bis 136, beschrieben werden, beispielsweise 1,6-Hexamethylendiisocyanat, 1,12-Dodecandiisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan, 2,4- und 2,6-Hexahydrotoluylendiisocyanat sowie beliebige Gemische dieser Isomeren, Hexahydro-1,3- und/oder 1,4-phenylen-diisocyanat, Perhydro-2,4′- und/oder -4,4′-diphenylmethan-diisocyanat, 1,3- und 1,4-Phenylendiisocyanat, 2,4- und 2,6- Toluylendiisocyanat sowie beliebige Gemische dieser Isomeren, Diphenylmethan-2,4′- und/oder -4,4′-diisocyanat, Naphthylen-1,5-diisocyanat, Polyphenyl-polymethylen-polyisocyanate, wie sie in den britischen Patentschriften 874 430 und 848 671 aufgeführt sind. Ferner sind geeignet m- und p-Isocyanatophenylsulfonylisocyanate, perchlorierte Arylpolyisocyanate, Carbodiimidgruppen aufweisende Polyisocyanate, Allophanatgruppen aufweisende Polyisocyanate, Isocyanuratgruppen aufweisende Polyisocyanate. Urethangruppen aufweisende Polyisocyanate, acylierte Harnstoffgruppen aufweisende Polyisocyanate, Biuretgruppen aufweisende Polyisocyanate, durch Telomerisationsreaktionen hergestellte Polyisocyanate, wie sie z.B. in der amerikanischen Patentschrift 3 654 106 beschrieben werden, Estergruppen aufweisende Polyisocyanate, wie sie zum Beispiel in den britischen Patentschriften 965 474 und 1 072 956, in der amerikanischen Patentschrift 3 567 763 und in der deutschen Patentschrift 1 231 688 genannt werden, Umsetzungsprodukte der obengenannten Isocyanate mit Acetalen gemäss der deutschen Patentschrift 1 072 385 und polymere Fettsäureester enthaltende Polyisocyanate gemäss der amerikanischen Patentschrift 3 455 883.

Es ist auch möglich, Isocyanatgruppen aufweisende Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Besonders bevorzugt werden in der Regel die technisch leicht zugänglichen Polyisocyanate, z.B. das 2,4- und 2,6-Toluylen-diisocyanat sowie beliebige Gemische dieser Isomeren («TDI»), Polyphenyl-polymethylen-polyisocyanate, wie sie durch Anilin-Formaldehyd-Kondensation und anschliessende Phosgenierung hergestellt werden («rohes MDI») und Carbodiimidgruppen, Urethangruppen, Allophanatgruppen, Isocyanuratgruppen, Harnstoffgruppen oder Biuretgruppen aufweisenden Polyisocyanate («modifizierte Polyisocyanate»).

Sollen nach den erfindungsgemässen Verfahren Polyurethanschäume hergestellt werden, dann werden Wasser und/oder leicht flüssige organische Substanzen als Treibmittel mitverwendet.

Als organische Treibmittel kommen z.B. Aceton, halogensubstituierte Alkane wie Methylenchlorid, Monofluortrichlormethan, Chlordifluormethan, Dichloridfluormethan, ferner Butan oder Hexan in Frage. Eine Treibwirkung kann auch durch Zusatz von bei Temperaturen über Raumtemperatur unter Abspaltung von Gasen, beispielsweise von Stickstoff, sich zersetzenden Verbindungen, z.B. Azoverbindungen wie Azoisobuttersäurenitril, erzielt werden. Weitere Beispiele für Treibmittel sowie Einzelheiten über die Verwendung von Treibmitteln sind im Kunststoff-Handbuch, Band VII, herausgegeben von Vieweg und Höchtlen, Carl-Hanser-Verlag, München 1966, z.B. auf den Seiten 108 und 109, 453 bis 455 und 507 bis 510 beschrieben.

Erfindungsgemäss werden ferner oft Katalysatoren mitverwendet. Als mitzuverwendende Katalysatoren kommen solche der an sich bekannten Art in Frage, z.B. tertiäre Amine oder auch an sich bekannte Mannichbasen aus sekundären Aminen und Aldehyden oder Ketonen in Frage.

Gegenüber Isocyanatgruppen aktive Wasserstoffatome aufweisende tertiäre Amine als Katalysatoren sind z.B. Triäthanolamin, Triisopropanolamin, N-Mehyl-diäthanolamin, N-Äthyl-diäthanolamin, N,N-Dimethyl-äthanolamin, sowie deren Umsetzungsprodukte mit Alkylenoxiden, wie Propylenoxid und/oder Äthylenoxid.

Als Katalysatoren kommen ferner Silaamine mit Kohlenstoff-Silizium-Bindungen, wie z.B. in der deutschen Patentschrift 1 229 290 (entsprechend der amerikanischen Patentschrift 3 620 984) beschrieben sind, in Frage, z.B. 2,2,4-Trimethyl-2-silamorpholin.

Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden.

Erfindungsgemäss können auch organische Metallverbindungen, insbesondere organische Zinnverbindungen, als Katalysatoren, verwendet werden.

Selbstverständlich können alle obengenannten Katalysatoren als Gemische eingesetzt werden.

Weitere Vertreter von erfindungsgemäss zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z.B. auf den Seiten 96 bis 102 beschrieben.

Die Katalysatoren werden in der Regel in einer Menge zwischen etwa 0,001 und 10 Gew.-%, bezogen auf die Menge an Verbindungen mit mindestens zwei gegenüber Isocyanaten reaktionsfähigen Wasserstoffatomen von einem Molekulargewicht von 400 bis 10 000, eingesetzt.

Erfindungsgemäss können auch oberflächenaktive Zusatzstoffe, wie Emulgatoren und Schaumstabilisatoren, mitverwendet werden. Als Emulgatoren kommen z.B. die Natriumsalze von Ricinusölsulfonaten oder Salze von Fettsäuren mit Aminen wie ölsaures Diäthylamin oder stearinsaures Diäthanolamin in Frage. Auch Alkali- oder Ammoniumsalze von Sulfonsäuren wie etwa von Dodecylbenzolsulfonsäure oder Dinaphthylmethandisulfonsäure oder von Fettsäuren wie Ricinolsäure oder von polymeren Fettsäuren können als oberflächenaktive Zusatzstoffe mitverwendet werden.

Als Schaumstabilisatoren kommen vor allem Polyäthersiloxane, speziell wasserlösliche Vertreter, in Frage. Diese Verbindungen sind im allgemeinen so aufgebaut, dass ein Copolymerisat aus Äthylenoxid und Propylenoxid mit einem Polydimethylsiloxanrest verbunden ist. Derartige Schaumstabilisatoren sind z.B. in den amerikanischen Patentschriften 2 834 748, 2 917 480 und 3 529 308 beschrieben.

Erfindungsgemäss können ferner auch Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. Tris-chloräthylphosphat, Trikresylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Russ oder Schlämmkreide mitverwendet werden.

Weitere Beispiele, sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113 beschrieben.

Die Reaktionskomponenten werden erfindungsgemäss nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der amerikanischen Patentschrift 2 764 565 beschrieben werden. Einzelheiten über Verarbeitungseinrichtungen, die auch erfindungsgemäss in Frage kommen, werden im Kunststoff-Handbuch, Band VII, herausgegeben von Vieweg und Höchtlen, Carl-Hanser-Verlag, München 1966, z.B. auf den Seiten 121 bis 205 beschrieben.

Bei der Schaumstoffherstellung wird erfindungsgemäss die Verschäumung oft in Formen durchgeführt. Dabei wird das Reaktionsgemisch in eine Form eingetragen. Als Formmaterial kommt Metall, z.B. Aluminium, oder Kunststoff, z.B. Epoxidharz, in Frage. In der Form schäumt das schäumfähige Reaktionsgemisch auf und bildet den Formkörper. Die Formverschäumung kann dabei so durchgeführt werden, dass das Formteil an seiner Oberfläche Zellstruktur aufweist, es kann aber auch so durchgeführt werden, dass das Formteil eine kompakte Haut und einen zelligen Kern aufweist. Erfindungsgemäss

kann man in diesem Zusammenhang so vorgehen, dass man in die Form so viel schäumfähiges Reaktionsgemisch einträgt, dass der gebildete Schaumstoff die Form gerade ausfüllt. Man kann aber auch so arbeiten, dass man mehr schäumfähiges Reaktionsgemisch in die Form einträgt, als zur Ausfüllung des Forminneren mit Schaumstoff notwendig ist. Im letztgenannten Fall wird somit unter «overcharging» gearbeitet; eine derartige Verfahrensweise ist z.B. aus den amerikanischen Patentschriften 3 178 490 und 3 182 104 bekannt.

Bei der Formverschäumung werden vielfach an sich bekannte «äussere Trennmittel» oder auch sogenannte «innere Trennmittel», gegebenenfalls im Gemisch mit äusseren Trennmitteln, verwendet.

Erfindungsgemäss lassen sich auch kalthärtende Schaumstoffe herstellen (vgl. britische Patentschrift 1 162 517, deutsche Offenlegungsschrift 2 153 086).

Selbstverständlich können aber auch Schaumstoffe durch Blockverschäumung oder nach dem an sich bekannten Doppeltransportbandverfahren hergestellt werden.

Eine ausführliche Zusammenstellung der als Ausgangsmaterialien für das Verfahren zu verwendenden höhermolekularen Polyhydroxylverbindungen, mindestens 2 Hydroxy-gruppen-tragende Verbindungen vom Molekulargewicht 32–400, Polyisocyanaten, sowie Katalysatoren, Treibmittel und Zusatzstoffe werden in der europäischen Patentanmeldung, Veröffentlichungsnummer 0 000 551, veröffentlicht am 29.2.1979, aufgeführt.

Die Mengen der Reaktionskomponenten werden im erfindungsgemässen Verfahren bevorzugt so gewählt, dass das Molverhältnis von Polyisocyanaten zu Verbindungen mit reaktionsfähigen OH- und $NH_2$-Gruppen – unabhängig vom jeweils angewendeten Verarbeitungsverfahren – in der Regel zwischen 0,9:1 und 1,5:1 liegt, vorzugsweise zwischen 1,05:1 und 1,25:1. Der Prozentgehalt an NCO im Prepolymer, falls über die Prepolymerstufe gearbeitet wird, kann z.B. 1 bis 6 Gew.-% betragen. Das Molverhältnis von reaktionsfähigem Wasserstoff des Kettenverlängerers zu reaktionsfähigen OH-Gruppen kann in weiten Grenzen variieren, vorzugsweise soll es zwischen 0,4:1 und 1,5:1 liegen, wobei weiche bis harte Polyurethan-Typen resultieren. Neben den erfindungsgemäss zu verwendenden Diaminen können als Kettenverlängerer anteilweise auch weitere Diamine oder auch Diole eingesetzt werden, z.B. solche, wie sie oben bei der Herstellung der Polyhdroxylverbindungen genannt wurden. Der Molenbruch des erfindungsgemässen Amins im Kettenverlängerungsmittel soll aber zwischen 1 und 0,5 liegen, vorzugsweise zwischen 1 und 0,8.

Für das erfindungsgemässe Verfahren sind verschiedene Varianten möglich. So kann man z.B. die Verbindung mit mindestens zwei Hydroxylgruppen und einem Molekulargewicht von 400–10 000 mit einem Überschuss an Diisocyanat zur Reaktion bringen und nach der Zugabe des Kettenverlängerungsmittels die Schmelze in Formen giessen. Nach mehrstündigem Nachheizen ist ein hochwertiger elastischer Polyurethankunststoff entstanden.

Eine weitere Ausführungsform besteht darin, dass man die höhermolekulare Verbindung mit mindestens zwei Hydroxylgruppen im Gemisch mit dem Kettenverlängerungsmittel mit einem Überschuss an Diisocyanat umsetzt und das Reaktionsprodukt nach der Granulierung in der Hitze unter Druck verformt. Je nach den angewendeten Mengenverhältnissen der Reaktionsteilnehmer können hierbei Polyurethankunststoffe mit verschiedenartigen Härten und verschiedenartiger Elastizität erhalten werden. Man kann auf diese Weise auch Kunststoffe herstellen, die sich wie Thermoplaste verarbeiten lassen. Eine weitere Ausführungsform besteht darin, dass man die höhermolekulare Verbindung mit mindestens zwei Hydroxylgruppen im Gemisch mit erfindungsgemäss zu verwendenden Kettenverlängerungsmittel mit einem Unterschuss an Diisocyanat umsetzt, wobei ein walzbares Fell erhalten wird, das anschliessend, z.B. durch Vernetzung mit weiterem Diisocyanat, in einen kautschukelastischen Polyurethankunststoff übergeführt werden kann.

Erfindungsgemäss hergestellte Elastomere finden vielseitige Anwendung, z.B. für mechanisch stark beanspruchte Formkörper, wie Rollen, Keilriemen oder Dichtungen, die thermisch oder chemisch stark beansprucht werden (z.B. für Heisswasserrohre oder in Motoren) oder zur Herstellung von Folien, Textilbeschichtungen und Polyurethanpulvern.

Die Kettenverlängerung kann auch in Gegenwart der oben beschriebenen Treibmittel und Zusatzstoffe, bevorzugt in geschlossenen Formen, ausgeführt werden, wobei Schäume mit zelligem Kern und kompakter Oberfläche gebildet werden.

Die nach dem erfindungsgemässen Verfahren zugänglichen elastischen und halbelastischen Schaumstoffe werden beispielsweise als Polstermaterialien, Matratzen, Verpackungsmaterial und wegen ihrer Flammfestigkeit auch in jenen Bereichen verwendet, wo diese Eigenschaften besonders wichtig sind, wie z.B. im Automobil- und Flugzeugbau und im allgemeinen Verkehrswesen. Die Schaumstoffe können dabei entweder nach dem Formschäumungsverfahren hergestellt werden oder durch Konfektionierung aus blockgeschäumtem Material erhalten werden.

Die folgenden Beispiele erläutern das erfindungsgemässe Verfahren. Wo nicht anders vermerkt, sind Zahlenwerte als Gewichtsteile bzw. Gewichtsprozent zu verstehen.

A) Herstellung der Diamine

(Die Struktur der nachstehend beschriebenen araliphatischen Diamine wurde durch ihre IR-, NMR- und Massenspektren sowie durch Elementaranalyse eindeutig nachgewiesen.)

2-(2-Aminoäthylthio)-anilin

135 Teile Benzothiazol und 80 Teile Natriumhydroxid werden in 200 Teilen Wasser 3 Stunden unter Rückfluss gekocht. Nach dem Abkühlen auf 70°C werden 200 Teile Methanol hinzugefügt und bei 70°C innerhalb von 2 Stunden eine Lösung von 116 Teilen Chloräthylamin · HCl in 200 Teilen Wasser in den Ansatz getropft. Man rührt weitere 3 Stunden unter Rückfluss, kühlt ab und versetzt die Mischung mit einer Lösung von 50 Teilen Natriumhydroxid in 100 Teilen Wasser. Dann wird die organische Phase abgetrennt und die wässrige Phase zweimal mit je 100 Teilen Toluol extrahiert.

Die vereinigten org. Phasen werden eingedampft. Man erhält 156 Teile 2-(2-Aminoäthylthio)-anilin in Form einer gelblichen Flüssigkeit vom Siedepuntk 125°C/0,06 mm.

Elementaranalyse ($C_8H_{12}N_2S$):

| | C | H | N | S |
|---|---|---|---|---|
| Ber.: | 57,11 | 7,19 | 16,65 | 19,05 |
| Gef.: | 57,05 | 7,30 | 16,48 | 19,00 |

2-(3-Aminopropylthio)-anilin

270 Teile Benzothiazol und 160 Teile Natriumhydroxid werden in 400 Teilen Wasser 3 Stunden unter Rückfluss gekocht. Nachdem Abkühlen auf 70°C werden 250 Teile Methanol hinzugeführt und bei 70°C innerhalb von 2 Stunden eine Lösung von 260 Teilen 3-Chlorpropylamin · HCl in 500 Teilen Wasser in den Ansatz getropft. Nachdem man weitere 3 Stunden bei 100°C nachgerührt hat, wird abgekühlt und eine Lösung von 100 Teilen Natriumhydroxid in 200 Teilen Wasser hinzugefügt. Man trennt die organische Phase ab, wäscht die wässrige Phase noch zweimal mit je 200 Teilen Toluol und dampft die vereinigten organischen Phasen ein.

Es verbleiben 346 Teile 2-(3-Aminopropylthio)-anilin als gelbliche Flüssigkeit vom Siedepunkt 130°C/0,04 mm.

Elementaranalyse ($C_9H_{14}N_2S$):

| | C | H | N | S |
|---|---|---|---|---|
| Ber.: | 59,30 | 7,74 | 15,37 | 17,59 |
| Gef.: | 59,15 | 7,83 | 15,51 | 17,40 |

2-(6-Aminohexylthio)-anilin

135 Teile Benzothiazol und 80 Teile Natriumhydroxid werden in 200 Teilen Wasser 3 Stunden unter Rückfluss gekocht. Nach dem Abkühlen auf 60°C werden 600 Teile Methanol eingetragen und bei 70°C 224,7 Teile N-(6-Chlorhexyl)-O-tert.-butyl-urethan innerhalb von 2 Stunden zugetropft. Nachdem man weitere 3 Stunden bei 70°C nachgerührt hat, kühlt man ab und trennt die organische Phase ab. Die wässrige Phase wird noch zweimal mit je 150 Teilen Toluol extrahiert und die organische Phase anschliessend eingedampft. Es verbleiben 308 Teile einer gelben, viskosen Flüssigkeit, die zu 950 Teilen konzentrierter Salzsäure hinzugefügt werden. Man kocht 2 Stunden unter Rückfluss, kühlt ab und macht mit Natronlauge alkalisch. Anschliessend wird die organische Phase abgetrennt, die wässrige Phase noch zweimal mit je 200 Teilen Toluol extrahiert und die vereinigten organischen Phasen eingedampft. Es verbleiben 210 Teile 2-(6-Aminohexylthio)-anilin als gelbliche Flüssigkeit vom Siedepunkt 145°C/0,04 mm.

Elementaranalyse ($C_{12}H_{20}N_2S$):

| | C | H | N | S |
|---|---|---|---|---|
| Ber.: | 64,24 | 8,99 | 12,49 | 14,29 |
| Gef.: | 64,10 | 9,13 | 12,40 | 14,31 |

Untersuchung der Reaktivität von Diaminen gemäss vorstehenden Herstellungsvorschriften gegenüber Isocyanaten:

a) In eine Lösung von 0,1 Mol 2(2-Aminoäthylthio)anilin in 50 g Chlorbenzol werden bei 10°C 17,0 g (0,2 Mol) Propylisocyanat gegeben. Der NCO-Gehalt der Lösung beträgt 9,3%. Das Reaktionsgemisch erwärmt sich auf 63°C. Eine nach 30 Sekunden durchgeführte NCO-Bestimmung ergibt 4,12% NCO. Nach weiteren 10 Minuten können noch 1,8% NCO nachgewiesen werden.

b) Analog wie unter a) beschrieben, werden 0,1 Mol 2-(3-Aminopropylthio)anilin und 0,2 Mol Propylisocyanat umgesetzt. Der Anfangsgehalt an NCO-Gruppen beträgt 9,1%; das Reaktionsgemisch erwärmt sich auf 60°C. Nach 30 Sekunden sind noch 4,0% NCO, nach 15 Minuten noch 3,95% NCO und nach 45 Minuten 3,6% NCO durch Titration nachzuweisen.

c) Analog wie unter a) beschrieben, werden 0,1 Mol 2-(6-Aminohexylthio)-anilin und 0,2 Mol Propylisocyanat umgesetzt. Der Anfangs-NCO-Gehalt beträgt 8,65%. Das Reaktionsgemisch erwärmt sich nach Zugabe des Isocyanats auf 62°C. Nach 30 Sekunden sind noch 4,1% NCO, nach 15 Minuten 3,8% und nach 105 Minuten noch 3,4% an NCO-Gruppen nachzuweisen.

Die Versuche zeigen, dass bei den erfindungsgemäss zu verwendenden Diaminen die aromatische Aminogruppe gegenüber Isocyanaten wesentlich weniger reaktiv ist als die aliphatische.

Die Untersuchung von 2(2-Aminoäthylthio)-anilin auf mutagene Wirkung verlief negativ, d.h. es wurden keine mutagenen Wirkungen festgestellt.

Testmethode war der Salmonella/Mikrosomen-Test, «Ames-Test», nach B.N. Ames et al., Mutation Res. 31, 347-364, 1975.

B) Herstellung von Polyurethanharnstoffen

Beispiel 1

Zu 100 Teilen eines Prepolymeren mit einem NCO-Gehalt von 3,7% aus Polytetrahydrofuran vom mittleren Molekulargewicht 1500 und 2,4-Toluylendiisocyanat werden bei 110°C 7,28 Teile flüssiges 2-(2-Aminopropylthio)-anilin gegeben ($NCO/NH_2$ = 1,1). Innerhalb von 30 Sekunden wird die Mischung homogenisiert und in eine vorgeheizte Form gegossen. Das reagierende Gemisch bleibt 7 Minuten giessbar. Nach einer Temperzeit von 24 h bei 110 °C wird ein Giessling mit folgenden mechanischen Eigenschaften erhalten:

| | | |
|---|---|---|
| Zugfestigkeit | DIN 53 504 | 36,9 MPa |
| Bruchdehnung | DIN 53 504 | 628% |
| Weiterreiss-widerstand | DIN 53 515 | 24,5kN/m |
| Shore A | DIN 53 503 | 77 |
| Elastizität | DIN 53 512 | 30% |

Beispiel 2

Zu 100 Teilen eines Prepolymeren mit einem NCO-Gehalt von 4,63% aus einem Polyäthergemisch, bestehend aus 90% eines Polypropylenglykols der OH-Zahl 56 und 10% eines Polyäthertriols der OH-Zahl 35 (auf Trimethylolpropan gestartetes Mischpolymeres aus Propylenoxid und Äthylenoxid), Tetraäthylenglykol und 2,4-Toluylendiisocyanat, werden bei 110 °C 8,41 Teile flüssiges 2-(2-Aminoäthylthio)-anilin gegeben ($NCO/NH_2$ = 1,1). Innerhalb von 30 Sekunden wird die Mischung homogenisiert und in eine vorgeheizte Form gegossen. Das reagierende Gemisch bleibt 4 Minuten giessbar. Nach einer Temperzeit von 24 h bei 110 °C wird ein Formkörper mit folgenden mechanischen Werten erhalten:

| | | |
|---|---|---|
| Zugfestigkeit | DIN 53 504 | 29,4 MPa |
| Bruchdehnung | DIN 53 504 | 617% |
| Weiterreiss-widerstand | DIN 53 515 | 32,8 kN/m |
| Shore Härte A | DIN 53 503 | 76 |
| Elastizität | DIN 53 512 | 29% |

Beispiel 3 und 4

Beispiel 1 und 2 werden mit dem jeweils gleichen Ansatz wiederholt; die Vermischung mit den Diaminen erfolgte jedoch bei Raumtemperatur. Die Mischungen bleiben mehrere Stunden giessbar und werden danach in vorgeheizte Formen gegossen. Die erhaltenen Formkörper haben dieselben mechanischen Eigenschaften wie in Beispiel 1 und 2.

Beispiel 5

Halbharter Polyätherurethanschaum.

Es bedeuten

$T_1$ = Beginn der Treibreaktion

$T_2$ = Ende der Treibreaktion

$T_3$ = Klebfreiheit

$T_4$ = Aushärtezeit (nach dieser Zeit ist es von Hand nicht mehr möglich, Teile aus dem Schaum zu reissen).

Rezeptur:

50 g trifunktioneller Polyäther aus Trimethylolpropan, Propylen- und Äthylenoxid, OH-Zahl: 35;

5 g 2-(2-Aminoäthylthio)-anilin

0,3 g Triäthylendiamin

0,04 g Dibutylzinndilaurat

6 g Trifluorchlormethan

Die Komponenten werden bei Raumtemperatur vermischt und mit 16,6 g eines rohen 4,4′-Diisocyanatodiphenylmethans mit einem NCO-Gehalt von 23% verrührt.

$T_1$ = 10 sec.

$T_2$ = 30 sec.

$T_3$ = 62 sec.

$T_4$ = 62 sec.

Nach Entformung wird ein hochelastischer halbharter Schaumkörper erhalten (Raumgewicht: ca. 400 mg/cm³).

Beispiel 6

Beispiel 5 wird unter Verwendung von 100 g des trifunktionellen Polyäthers wiederholt; als araliphatisches schwefelhaltiges Diamin werden 10 g 2-(2-Aminopropylthio)-anilin und zusätzlich als niedermolekulares Glykol 5 g N-Methyl-diäthanolamin eingesetzt. Die Menge an Diphenylmethandiisocyanat beträgt 47 g.

$T_1$ = 8 sec.

$T_2$ = 30 sec.

$T_3$ = 55 sec.

$T_4$ = 55 sec.

Nach der Entformung wird ein hochelastischer, halbharter Schaumkörper erhalten, der ein besonders niedriges Raumgewicht aufweist.

Beispiel 7

Beispiel 6 wird unter Verwendung von 2-(2-Aminohexylthio)-anilin wiederholt.

$T_1$ = 8 sec.

$T_2$ = 28 sec.

$T_3$ = 47 sec.

$T_4$ = 49 sec.

Nach der Entformung wird ein hochelastischer Schaumkörper mit niedrigem Raumgewicht erhalten.

Beispiel 8

Rezeptur:

350,0 g Polyester aus Phthalsäure-Adipinsäure und Äthylenglykol (OH-Zahl: 64,1)

87,4 g propoxyliertes Addukt aus 2-Butendiol-1,4 und $NaH\ SO_3$ (Molekulargewicht: 427; 66%ig in Toluol)

9,0 g Butandiol-(1,4)

102,3 g Hexamethylendiisocyanat-(1,6)

58,5 o-Anilin-aminoäthylthioäther

1250,0 g entsalztes Wasser.

a) Der Polyester und das Addukt werden bei 110 °C unter Rühren im Wasserstrahlvakuum entwässert. Das Gemisch wird auf 80°C abgekühlt und das Butandiol eingerührt. Nach 10minütigem Rühren wird das Diisocyanat zugegeben und bei 80 °C verrührt, bis ein NCO-Wert von 2,8 erreicht ist (ca. 2 Stunden). Dann wird bei 60 °C das Diamin zugegeben und bei 60 °C gerührt, bis die Schmelze NCO-frei ist (ca. 30 Minuten). Der Feststoff lässt sich mit Wasser sehr gut in eine feinteilige Dispersion umwandeln, die bei einem Feststoffgehalt von 30,4% eine Fordbecherviskosität

(4 mm Düse) von 12 Sekunden hat. Das mittlere Molekulargewicht des Feststoffes beträgt 3280. Der Feststoff enthält 23,6 Milliäquivalente pro 100 g (1,89%) an $SO_3^{\ominus}$-Gruppen.

b) 607 g der obigen Dispersion werden mit 9,6 g eines 80:20-Gemisches aus 2,4- und 2,6-Diisocyanatotoluol 10 Minuten lang verrührt. Danach werden analog zu DOS 2708442 weitere 9,6 g des obigen Isocyanat-Gemisches zugegeben und gerührt, bis kein Isocyanat mehr gefunden wird. Man erhält eine sedimentationsstabile Dispersion, die im durchscheinenden Licht einen Tyndall-Effekt zeigt. Bei einem Feststoffgehalt von 32,8% hat die Dispersion eine Fordbecherviskosität (4 mm Düse) von 12,7 Sekunden. Ihr pH-Wert beträgt 4,5. Ein Film aus dieser Dispersion ist sehr hart und klebt nicht.

Beispiel 9

Zu 601 g der Dispersion aus Beispiel 8a werden 18,4 g eines Bisepoxids der Formel

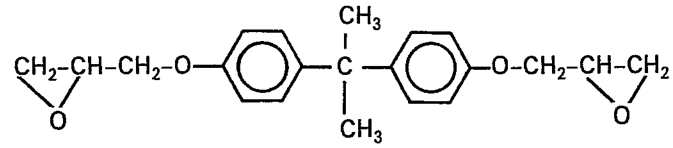

in 50 g Aceton gelöst, bei Raumtemperatur zugegeben. Das Gemisch wird anschliessend auf 80 °C aufgeheizt und 4 Stunden bei dieser Temperatur gerührt. Hierbei wird die geringe Menge Aceton im Wasserstrahlvakuum abgezogen. Man erhält eine zentrifugenstabile Dispersion (15 Minuten bei 3500 U/Min) mit einer Fordbecherauslaufzeit (4 mm Düse) von 14,4 Sekunden bei einem Feststoffgehalt von 39,5%. Der pH-Wert beträgt 4,5. Die Dispersion kann z.B. als Haftstrich auf den verschiedensten Materialien wie z.B. Textil oder Leder eingesetzt werden.

Beispiel 10

Zu 500 g der Dispersion aus Beispiel 8a werden 11,4 g verflüssigtes, warmes 4,4'-Diisocyanatodiphenyl-methan gegeben und das Gemisch langsam unter Rühren auf 80 °C erwärmt. Bei dieser Temperatur wird noch 4 Stunden nachgerührt. Die Dispersion ist dann isocyanatfrei.

Man erhält eine feinteilige Dispersion, die im durchscheinenden Licht einen Tyndall-Effekt aufweist. Die Dispersion hat einen pH-Wert von 7,5. Die Fordbecherauslaufzeit (4 mm-Düse) beträgt 35,3 Sekunden bei einem Feststoffgehalt von 35,3%.

Der Film aus der Dispersion ist klebfrei und hart.

**Patentansprüche**

1. Polyurethankunststoffe auf Basis von Polyisocyanaten, höhermolekularen und gegebenenfalls niedermolekularen Polyhydroxylverbindungen sowie schwefelhaltigen Diaminen, dadurch gekennzeichnet, dass sie Struktureinheiten der allgemeinen Formel

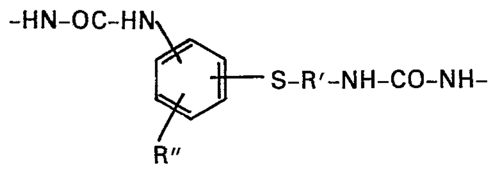

enthalten, in welcher

R' für einen gegebenenfalls verzweigten divalenten aliphatischen, cycloaliphatischen oder araliphatischen Rest mit 2 bis 20 C-Atomen steht, wobei R' an die -NH-Gruppe aliphatisch gebunden ist, und

R'' Wasserstoff, einen gegebenenfalls verzweigten Alkylrest mit 1-6 C-Atomen, einen Arylrest mit 6-15 C-Atomen, einen Cycloalkylrest mit 4-12 C-Atomen, Halogen, $-NO_2$, -CN, -OR''' oder einen Rest $-\underset{\overset{\|}{O}}{C}-O-R'''$

darstellt, wobei

R''' einen gegebenenfalls verzweigten Alkylrest mit 1 bis 6 C-Atomen bedeutet.

2. Polyurethankunststoffe gemäss Anspruch 1, dadurch gekennzeichnet, dass sie Struktureinheiten der Formel

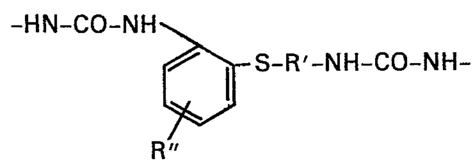

enthalten,

in der

R' und R'' die in Anspruch 1 angegebene Bedeutung haben.

3. Polyurethankunststoffe gemäss Anspruch 1 und 2, dadurch gekennzeichnet, dass R'' für Wasserstoff steht.

4. Verfahren zur Herstellung von gegebenenfalls zellförmigen Polyurethankunststoffen aus

a) Polyisocyanaten

b) Verbindungen mit mindestens zwei Hydroxylgruppen vom Molekulargewicht 400-10000, gegebenenfalls

c) niedermolekularen Verbindungen mit mindestens zwei Hydroxylgruppen von einem Molekulargewicht 32-400 und

d) schwefelhaltigen Diaminen als Kettenverlängerungsmittel, dadurch gekennzeichnet, dass als Diamine solche der allgemeinen Formel

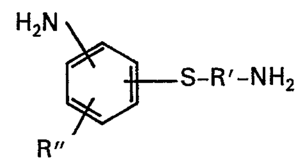

verwendet werden, in welcher
R′ und R″ die in Anspruch 1 angegebene Bedeutung haben.

5. Verfahren gemäss Anspruch 4, dadurch gekennzeichnet, das als Diamine solche der Formel

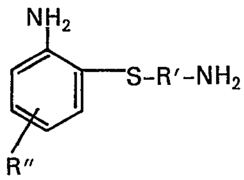

verwendet werden.

6. Verfahren gemäss Anspruch 4, dadurch gekennzeichnet, dass als Diamine solche der Formel

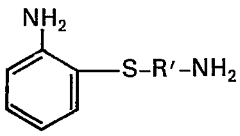

verwendet werden.

**Patent Claims**

1. Polyurethane plastics based on polyisocyanates, relatively high molecular weight and, optionally, low molecular weight polyhydroxyl compounds and sulphur-containing diamines, characterised in that they contain structural units of the general formula

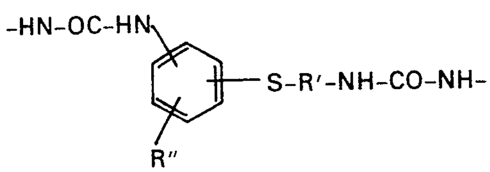

in which
R′ represents an optionally branched divalent aliphatic, cycloaliphatic or araliphatic radical containing from 2 to 20 carbon atoms, R′ being aliphatically linked to the -NH group and
R″ represents hydrogen, an optionally branched alkyl radical containing from 1 to 6 carbon atoms, an aryl radical containing from 6 to 15 carbon atoms, a cycloalkyl radical containing from 4 to 12 carbon atoms, halogen, $-NO_2$, -CN, -OR‴ or a radical $-\underset{\underset{O}{\|}}{C}-O-R'''$
wherein R‴ denotes an optionally branched alkyl radical containing from 1 to 6 carbon atoms.

2. Polyurethane plastics according to claim 1, characterised in that they contain structural units of the formula

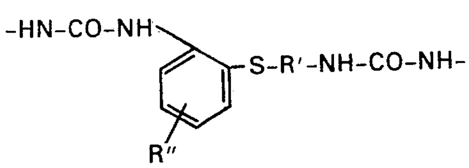

in which
R′ and R″ have the meaning indicated in claim 1.

3. Polyurethane plastics according to claim 1 and 2, characterised in that R″ represents hydrogen.

4. A process for the production of optionally cellular polyurethane plastics from
a) polyisocyanates,
b) compounds containing at least 2 hydroxyl groups and having a molecular weight of from 400 to 10,000, optionally
c) low molecular weight compounds containing at least two hydroxyl groups and having a molecular weight of from 32 to 400 and
d) sulphur-containing diamines as chain extenders, characterised in that the diamines used are those of the general formula

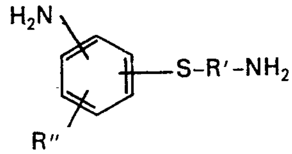

in which
R′ and R″ have the meaning indicated in claim 1.

5. A process according to claim 4, characterised in that the diamines used are those of the formula

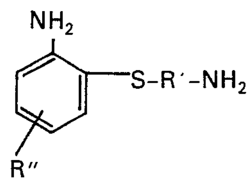

6. A process according to claim 4, characterised in that the diamines used are those of the formula

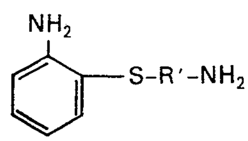

**Revendications**

1. Résines synthétiques de polyuréthannes à base de polyisocyanates, de composés polyhydroxylés à haut poids moléculaire et éventuellement à bas poids moléculaire et de diamines contenant du soufre, caractérisées en ce qu'elles contiennent des motifs de structure de formule générale

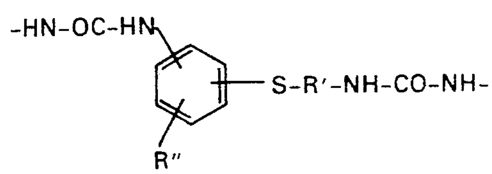

dans laquelle
R′ représente un reste aliphatique, cycloalipha-

tique ou araliphatique divalent éventuellement ramifiée en $C_2$-$C_{20}$, R′ étant relié au groupe -NH- par une liaison aliphatique, et

R″ représente l'hydrogène, un reste alkyle éventuellement ramifié en $C_1$-$C_6$, un reste aryle en $C_6$-$C_{15}$, un reste cycloalkyle en $C_4$-$C_{12}$, un halogène, un groupe $-NO_2$,-CN, -OR‴ ou un groupe

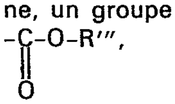

R‴ représentant un reste alkyle éventuellement ramifié en $C_1$-$C_6$.

2. Résines synthétiques de polyuréthannes selon la revendication 1, caractérisées en ce qu'elles contiennent des motifs de structure de formule

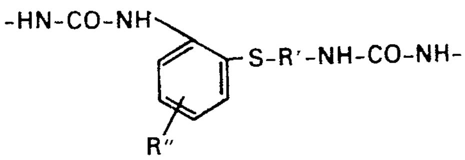

dans laquelle

R′ et R″ ont les significations indiquées dans la revendication 1.

3. Résines synthétiques de polyuréthannes selon les revendications 1 et 2, caractérisées en ce que R″ représente l'hydrogène.

4. Procédé de préparation de résines synthétiques de polyuréthannes éventuellement alvéolaires à partir de:

a) des polyisocyanates

b) des composés portant au moins deux groupes hydroxy et présentant un poids moléculaire de 400 à 10 000, éventuellement

c) des composés à bas poids moléculaire portant au moins deux groupes hydroxy et présentant un poids moléculaire de 32 à 400, et

d) des amines contenant du soufre en tant qu'agents d'allongement des chaînes,

ce procédé se caractérisant en ce que l'on utilise en tant que diamines des diamines répondant à la formule générale

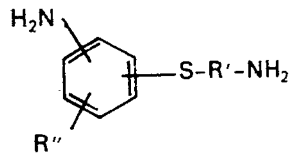

dans laquelle

R′ et R″ ont les significations indiquées dans la revendication 1.

5. Procédé selon la revendication 4, caractérisé en ce que l'on utilise des diamines répondant à la formule

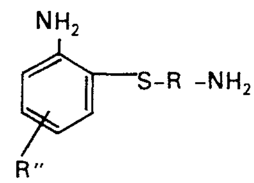

6. Procédé selon la revendication 4, caractérisé en ce que l'on utilise des diamines répondant à la formule